# EUROPEAN PATENT APPLICATION

(11) **EP 4 293 130 A1**
(43) Date of publication of application: **20.12.2023**
(21) Application number: 22752919.5
(22) Date of filing: 28.01.2022
(51) Int. Cl.: C21D 8/12, C21D 9/46, C22C 38/02, C22C 38/06, C22C 38/04

(54) **METHOD FOR MANUFACTURING NON-ORIENTED ELECTRICAL STEEL SHEET, AND NON-ORIENTED ELECTRICAL STEEL SHEET MANUFACTURED THEREBY**

(30) Priority: 10.02.2021 KR 20210019153
(71) Applicant: LG Electronics Inc., Yeongdeungpo-gu Seoul 07336 (KR)
(72) Inventor: JEONG, Changwoo, Seoul 08592 (KR); KIM, Jin Bae, Seoul 08592 (KR)
(74) Representative: Vossius & Partner Patentanwälte Rechtsanwälte mbB
(86) International application number: PCT/KR2022/001604
(87) International publication number: WO 2022/173159

(57) **Abstract**

The present invention relates to a method for manufacturing a non-oriented electrical steel sheet, and a non-oriented electrical steel sheet manufactured thereby, and the method for manufacturing a non-oriented electrical steel sheet, according to the present invention, comprises the steps of: (a) reheating a steel slab comprising 0.05 wt% or less of C, 1.0-3.5 wt% of Si, 0.2-0.6 wt% of Al, 0.02-0.20 wt% of Mn, 0.01-0.20 wt% of P, 0.01 wt% or less of S, and the balance of Fe and inevitable impurities, and then performing hot rolling on same; (b) performing hot rolling annealing heat-treatment and pickling on a hot rolled steel sheet; (c) performing cold rolling on the pickled steel sheet; (d) performing insulation coating on the cold rolled steel sheet, and then processing same; and (e) performing final heat treatment by heating, soaking and cooling the processed steel sheet, wherein soaking process is maintained and carried out at a temperature of 850 °C or higher for 1-30 minutes, and thus the deterioration of an insulation coating layer is inhibited while magnetic properties are improved.

## Description

### [Technical Field]

The present invention relates to a method of manufacturing a non-oriented electrical steel sheet and a non-oriented electrical steel sheet manufactured thereby.

### [Background Art]

Electrical steel sheets may be classified into oriented electrical steel sheets and non-oriented electrical steel sheets according to magnetic properties.

Oriented electrical steel sheets are manufactured to be easily magnetized in a rolling direction of the steel sheet and have particularly excellent magnetic properties in the rolling direction, and therefore oriented electrical steel sheets are mainly used as iron cores for large and medium-sized transformers which require low iron loss and high magnetic permeability.

On the other hand, non-oriented electrical steel sheets have uniform magnetic properties regardless of an orientation of the steel sheet. Thus, non-oriented electrical steel sheets are mainly used as iron cores for linear compressor motors, air conditioner compressor motors, and high-speed motors for cleaners.

Recently, according to the trend of increasing the efficiency and miniaturization of electric devices in terms of energy saving, research has been conducted on minimizing iron loss even in non-oriented electrical steel sheets.

### [Patent Document]

(Patent Document 1) Korean Registered Patent No. 10-0721863

### [Disclosure]

### [Technical Problem]

The present invention is directed to providing a non-oriented electrical steel sheet with improved magnetic properties of an electrical steel sheet by improving a final heat treatment process after processing the electrical steel sheet into parts for a motor, and a method of manufacturing the same.

The present invention is also directed to providing a non-oriented electrical steel sheet and a method of manufacturing the same, which can reduce iron loss while reducing process costs by shortening a final heat treatment time.

Objectives of the present invention are not limited to the above-described objectives, and other objectives and advantages of the present invention that are not described can be understood from the following description and also will be apparent from exemplary embodiments of the present invention. It is also to be easily understood that the objectives and advantages of the present invention may be realized and attained by means described in the appended claims and combinations thereof.

### [Technical Solution]

One aspect of the present invention provides a non-oriented electrical steel sheet and a method of manufacturing the same, which include final heat treatment in which heating, soaking, and cooling are performed after processing the electrical steel sheet into parts for a motor. The soaking may be maintained at a temperature of 850 °C or higher for 1 to 30 minutes to improve magnetic properties of the electrical steel sheet, reduce process costs, and reduce iron loss.

The heating may be performed by heating at 300 °C to 600 °C per hour for 1.4 to 3.2 hours, and the cooling may be performed to room temperature (about 24 °C) at a cooling rate of 100 °C per hour.

To this end, the non-oriented electrical steel sheet and the method of manufacturing the same may include 0.05 wt% or less C, 1.0 wt% to 3.5 wt% Si, 0.2 wt% to 0.6 wt% Al, 0.02 wt% to 0.20 wt% Mn, 0.01 wt% to 0.20 wt% P, 0.01 wt% or less S, and the balance of Fe and inevitable impurities.

### [Advantageous Effects]

In accordance with the present invention, by including final heat treatment of performing soaking at a high temperature of 850 °C or more after processing an electrical steel sheet into parts for a motor, magnetic properties of the electrical steel sheet can be improved by reducing mechanical stress. In accordance with a manufacturing method according to the present invention, degradation of an insulating coating layer can be suppressed.

In accordance with the non-oriented electrical steel sheet and the manufacturing method thereof according to the present invention, adhesiveness between the insulating coating layer and a surface of the electrical steel sheet can be maintained well, and improved magnetic properties, such as low iron loss, can be exhibited.

In addition, in accordance with the non-oriented electrical steel sheet and the manufacturing method thereof according to the present invention, a time of the final heat treatment is shortened, iron loss can be reduced, and process costs can be reduced.

In addition, in accordance with the non-oriented electrical steel sheet and the manufacturing method thereof according to the present invention, excellent magnetic properties are secured so that the non-oriented electrical steel sheet is suitable for use as iron cores for linear compressor motors, air conditioner compressor motors, and high-speed motors for cleaners.

In addition to the above-described effects, specific effects of the present invention will be described together with the following detailed description for implementing the present invention.

### [Description of Drawings]

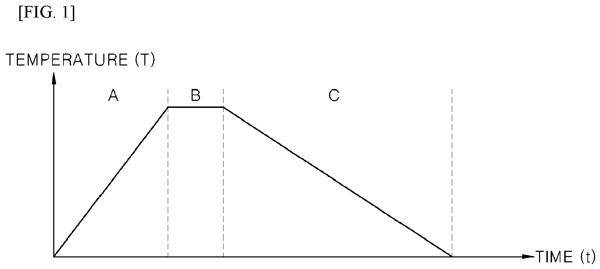

FIG. 1 is a graph showing a final heat treatment pattern according to one embodiment of the present invention.

### [Modes of the Invention]

The above and other objectives, features, and advantages of the present invention will be described in detail with reference to the accompanying drawings so that the technical spirit of the present invention can be easily implemented by those skilled in the art to which the present invention pertains. In the following description of the present invention, when detailed description of known related art is determined to obscure the gist of the present invention, the detailed description thereof will be omitted. Hereinafter, exemplary embodiments of the present invention will be described in detail with reference to the accompanying drawing. In the drawing, the same reference numeral refers to the same or similar component.

Throughout the specification, unless otherwise stated, each element may be singular or plural.

The singular forms used herein include plural forms unless the context clearly notes otherwise. In the present application, terms such as "consisting of" or "including" should not be construed as necessarily including all of various components or operations described in the specification, and it should be construed that some of the components or some of the operations may not be included, or additional components or operations may be further included.

Throughout the specification, "A and/or B" means "A, B or A and B" unless otherwise stated, and when "C to D" means "C or more and D or less" unless otherwise stated.

Hereinafter, a non-oriented electrical steel sheet and a method of manufacturing the same according to the present invention will be described in detail.

Typically, a non-oriented electrical steel sheet is processed in the order of hot rolling, hot rolling annealing heat-treatment, and cold rolling. In this way, in order to use the manufactured non-oriented electrical steel sheet as motor parts (a stator and a rotor), insulation coating and processing are performed on the manufactured non-oriented electrical steel sheet. On the other hand, the processing process increases mechanical and thermal stress on a cut cross section of a material, thereby deteriorating inherent magnetic properties of the electrical steel sheet. For example, a magnetic domain magnetization polarity direction is magnetized in one direction at the processed cut portion so that the processed cut portion has a local polarity. In order to remove the stress generated during the processing, final heat treatment is performed.

According to the non-oriented electrical steel sheet of the present invention, costs are reduced and magnetic properties are improved through constant heat treatment and process optimization so that a non-oriented electrical steel sheet that can be efficiently used as parts for a motor compared to process costs may be manufactured. Thus, it is possible to implement high efficiency of the motor.

In the present invention, it is possible to improve the magnetic properties by performing final heat treatment at a high temperature after processing the electrical steel sheet into the parts for the motor and suppress degradation of an insulation coating layer.

To this end, the non-oriented electrical steel sheet according to an embodiment of the present invention includes 0.05 wt% or less C, 1.0 wt% to 3.5 wt% Si, 0.2 wt% to 0.6 wt% Al, 0.02 wt% to 0.20 wt% Mn, 0.01 wt% to 0.20 wt% P, 0.01 wt% or less S, and the balance of Fe and inevitable impurities.

In addition, the non-oriented electrical steel sheet according to the embodiment of the present invention may further include one or more among 0.03 wt% or less Cu, 0.03 wt% or less Ni, and 0.05 wt% or less Cr.

Here, the non-oriented electrical steel sheet according to the embodiment of the present invention may have a thickness ranging from 0.05 mm to 0.50 mm. When the thickness of the non-oriented electrical steel sheet is less than 0.05 mm, shape defects may be caused when used as iron cores for linear compressor motors, air conditioner compressor motors, and high-speed motors for cleaners. On the other hand, when the thickness of the non-oriented electrical steel sheet exceeds 0.50 mm, a large amount of aggregate structure cannot be secured and thus a magnetic flux density is lowered.

The non-oriented electrical steel sheet according to the present invention may have a low iron loss value ranging from about 2% to about 5% in both W10/400 and W15/50 measurement conditions.

In addition, the non-oriented electrical steel sheet according to the embodiment of the present invention has a tensile strength ranging from 350 N/mm² to 540 N/mm² and hardness ranging from 200 Hv to 270 Hv.

Hereinafter, the role and content of each component included in the non-oriented electrical steel sheet according to the embodiment of the present invention will be described.

### Carbon (C)

When a large amount of C is added, an austenite area is enlarged, a phase transformation section increases, and ferrite crystal grain growth is inhibited during final annealing heat-treatment, making iron loss worse. In addition, since C increases the iron loss due to magnetic aging when used after the processing from a final product to an electrical product, a content ratio may be controlled to be 0.05 wt% or less.

### Silicon (Si)

Si is added to increase specific resistance and reduce an eddy current loss of the iron loss.

Si may be added at a content ratio ranging from 1.0 wt% to 3.5 wt% based on the total weight of the non-oriented electrical steel sheet according to the embodiment of the present invention, and more preferably, at a content ratio ranging from 2.5 wt% to 3.2 wt%. When a small amount of Si is added at less than 1.0 wt%, it is difficult to obtain low iron loss characteristics and improve magnetic permeability in a rolling direction. In addition, when an excessive amount of Si is added at more than 3.5 wt%, a decrease of a magnetic flux density is caused, causing a decrease in torque of the motor an increase in copper loss, and cracks or strip breakage may occur during cold rolling due to an increase of brittleness.

### Aluminum (Al)

Al, together with Si, contributes to lowering the iron loss of the non-oriented electrical steel sheet.

Al may be added at a content ratio ranging from 0.2 wt% to 0.6 wt% based on the total weight of the non-oriented electrical steel sheet according to the embodiment of the present invention, and more preferably, at a content ratio ranging from 0.3 wt% to 0.5 wt%. When an added amount of Al is less than 0.2 wt%, it is difficult to sufficiently exhibit an addition effect. On the other hand, when the added amount of Al is excessive and exceeds 0.6 wt%, a decrease of a magnetic flux density is caused, and thus a torque of the motor is reduced or the copper loss increases.

### Manganese (Mn)

Mn serves to prevent cracks from being generated at both ends of a material during hot rolling.

Mn may be added at a content ratio ranging from of 0.02 wt% to 0.20 wt% based on the total weight of the non-oriented electrical steel sheet according to the embodiment of the present invention. When an added amount of Mn is less than 0.02 wt%, the risk of defects due to cracks increases during hot rolling On the other hand, when the added amount of Mn exceeds 0.20 wt% by weight, it is not preferable because a roll load increases and cold rollability deteriorates.

### Phosphorus (P)

P serves to increase specific resistance to lower iron loss.

P may be added at a content ratio ranging from of 0.01 wt% to 0.20 wt% based on the total weight of the non-oriented electrical steel sheet according to the embodiment of the present invention. When an added amount of P is less than 0.01 wt%, there is a problem in that crystal grains are excessively increased and thus magnetic deviation increases. On the other hand, when the added amount of P is excessive and exceeds 0.20 wt%, it is not preferable because cold rollability may deteriorate.

### Sulfur (S)

S reacts with Mn to form MnS, which is a fine precipitate, and tends to inhibit crystal grain growth, so S may be controlled to have as small an amount as possible. Therefore, S may be controlled to 0.01 wt% or less based on the total weight of the non-oriented electrical steel sheet according to the embodiment of the present invention.

### Copper (Cu)

Cu is added to improve a aggregate structure, suppress precipitation of fine CuS, and resist oxidation and corrosion. However, excessive addition of copper (Cu) in excess of 0.03 wt% may cause fining on a surface of the steel sheet, which is not preferable. Therefore, Cu may be controlled to a content ratio of 0.03 wt% or less based on the total weight of the non-oriented electrical steel sheet according to the embodiment of the present invention.

### Nickel (Ni)

Ni is added to improve a aggregate structure, suppress precipitation of S into fine CuS by being added together with Cu, and resist oxidation and corrosion. However, when an added amount of Ni exceeds 0.03 wt%, an improvement effect of the aggregate structure is insignificant despite the addition of a large amount and thus it is uneconomic. Therefore, Ni may be controlled to a content ratio of 0.03 wt% or less based on the total weight of the non-oriented electrical steel sheet according to the embodiment of the present invention.

### Chromium (Cr)

Cr serves to increase specific resistance to reduce iron loss and to prevent an increase in strength of the material. However, when an added amount of Cr is excessive and exceeds 0.05 wt%, there is a problem in that a magnetic flux density is reduced by promoting development of a aggregate structure unfavorable to magnetism. Therefore, Cr may be strictly controlled to a content ratio of 0.05 wt% or less based on the total weight of the non-oriented electrical steel sheet according to the embodiment of the present invention.

According to one embodiment of the present invention, a manufacturing method including hot rolling (S110), hot rolling annealing heat-treatment (S120), cold rolling (S130), insulation coating and processing (S140), and final heat treatment (S150) is provided. Specifically, there is provided a method of a non-oriented electrical steel sheet, which includes (a) reheating a steel slab, which includes 0.05 wt% or less C, 1.0 wt% to 3.5 wt% Si, 0.2 wt% to 0.6 wt% Al, 0.02 wt% to 0.20 wt% Mn, 0.01 wt% to 0.20 wt% P, 0.01 wt% or less S, and the balance of Fe and inevitable impurities, and then performing hot rolling on the steel slab; (b) performing hot rolling annealing heat-treatment and pickling on the hot rolled steel sheet; (c) performing cold rolling on the pickled steel sheet; (d) performing insulation coating on the cold rolled steel sheet, and then processing the insulation-coated steel sheet; and (e) performing final heat treatment by heating, soaking, and cooling the processed steel sheet, wherein the soaking is maintained and performed at a temperature of 850 °C or higher for 1 to 30 minutes.

### Hot rolling

In the hot rolling (S110), the steel slab, which includes 0.05 wt% or less C, 1.0 wt% to 3.5 wt% Si, 0.2 wt% to 0.6 wt% Al, 0.02 wt% to 0.20 wt% Mn, 0.01 wt% to 0.20 wt% P, 0.01 wt% or less S, and the balance of Fe and inevitable impurities, is reheated and hot-rolled.

Here, the steel slab may further include one or more among 0.03 wt% or less Cu, 0.03 wt% or less Ni, and 0.05 wt% or less Cr.

In this operation, in order to facilitate the hot rolling in the process of loading the steel slab having the above composition into a heating furnace and reheating the steel slab, a reheating temperature of the steel slab may be set to 1,050 °C or higher. However, when the reheating temperature of the steel slab exceeds 1,250 °C, precipitates that are harmful to iron loss characteristics, such as MnS and the like, are re-dissolved, and fine precipitates tend to be excessively generated after the hot rolling. These fine precipitates are undesirable because they hinder crystal grain growth and cause degradation of the iron loss characteristics. Therefore, the reheating is preferably performed at a temperature in a range from 1,050 to 1,250 °C for 1 to 3 hours.

In addition, in this operation, in order to prevent excessive generation of an oxide layer on the hot-rolled steel sheet, the hot rolling may be performed in a condition in which a finishing hot rolling temperature ranges from 800 °C to 950 °C.

Here, in order to prevent the oxide layer from being excessively generated and from hindering the grain growth, the hot-rolled steel sheet may be wound at a temperature ranging from 650 °C to 800 °C and then may be cooled in a coil state in the air.

### Hot rolling annealing heat-treatment

In the hot rolling annealing heat-treatment (S120), the hot-rolled steel sheet is hot-band annealed and pickled.

The hot rolling annealing heat-treatment is performed for the purpose of recrystallizing elongated grains in the center of the hot-rolled steel sheet and inducing a uniform grain distribution in a thickness direction of the steel sheet.

The hot rolling annealing heat-treatment may be performed in a condition in which a temperature ranges from 850 °C to 1,000 °C. When the temperature of the hot rolling annealing heat-treatment is less than 850 °C, a uniform crystal grain distribution may not be obtained, and thus improvement effects of the magnetic flux density and the iron loss may be insufficient. On the other hand, when the temperature of the hot rolling annealing heat-treatment exceeds 1,000 °C, the aggregate structure unfavorable to magnetism increases and the magnetic flux density deteriorates.

### Cold rolling

In the cold rolling (S130), the pickled steel sheet is cold-rolled at a reduction percentage of 55% or less.

In this operation, cold rolling is final rolling for the steel sheet to have a thickness in a range from 0.05 to 0.50 mm. When the thickness of the cold-rolled steel sheet is less than 0.05 mm, it is not desirable because shape defects may be caused when used as iron cores for linear compressor motors, air conditioner compressor motors, and high-speed motors for cleaners. On the other hand, when the thickness of the cold-rolled steel sheet exceeds 0.50 mm, it is not desirable because a large amount of aggregate structures cannot be secured and thus a magnetic flux density is lowered.

In this operation, the cold rolling may be performed at a reduction percentage of 55% or less, more preferably, at a reduction percentage ranging from 45% to 50%. When the reduction percentage of the cold rolling exceeds 55%, there is a problem in that the aggregate structure is strongly developed and a fraction of the aggregate structure with excellent magnetic properties is reduced.

Therefore, in order to suppress the generation of the aggregate structure and improve the magnetic properties by increasing the generation of the aggregate structure, the reduction percentage in the cold rolling may be strictly controlled to a reduction percentage of 55% or less.

In addition, the manufacturing method may further include a recrystallization heat treatment of performing recrystallization heat treatment on the cold-rolled steel sheet in a condition in which a temperature ranges from 700 °C to 900 °C. The recrystallization heat treatment may be more preferable to be performed at a temperature ranging from 750 °C to 850 °C for 1 to 60 minutes. Since the recrystallization heat treatment is further included, the steel sheet may have mechanical strength for the processing to be performed without straining a mold during the insulation coating and the processing after the cold rolling. Further, the steel sheet may be controlled to have a recrystallization rate in a range from 20 to 50 vol%, so that when crystal grains that have undergone partial recrystallization and recovery are heat-treated at a high temperature in the future, a possibility of growing in the direction may be increased.

When the temperature of the recrystallization heat treatment is less than 750 °C or the time of the recrystallization heat treatment is less than one minute, it is difficult to secure the mechanical strength, and thus processing in the mold may not be possible during the insulation coating and processing. On the other hand, when the temperature of the recrystallization heat treatment exceeds 850 °C or the time of the recrystallization heat treatment exceeds 60 minutes, due to the excessive heat treatment, the mechanical strength is higher than necessary as a result of the recrystallization rate exceeding 50 vol%, and a strain may be applied to the mold during the insulation coating and processing.

### Insulation coating and processing

In the insulation coating and processing (S140), the steel sheet undergoing the cold rolling or the recrystallization heat treatment is insulation-coated and then processed.

In this regard, the insulation coating is a treatment with organic, inorganic and organic-inorganic composite films or coating of other insulating films. In addition, the processing may be performed in the mold to manufacture the steel sheet into parts for a specific type of motor, but may not be limited thereto.

### Final heat treatment

FIG. 1 is a graph showing a final heat treatment pattern according to one embodiment of the present invention. In the final heat treatment (S150), the processed steel sheet is subjected to final heat treatment by performing heating (A), soaking (B), and cooling (C). It is possible to improve the magnetic properties of the electrical steel sheet by removing the local polarity formed on the cut surface by the processing through the final heat treatment and reducing the mechanical stress.

In the final heat treatment, the heating may be performed by heating at 300 °C to 600 °C per hour for 1.4 to 3.2 hours. When the temperature and the time are less than the above ranges, stress relief may be insufficient, and when the temperature and the time exceed the above ranges, damage may be applied to the insulation coating layer or the like. In this case, an atmosphere of 90% to 100% Ar may be used as a heat treatment atmosphere.

After the heating, the heat treatment during the soaking is maintained at a temperature of 850 °C or higher for 1 to 30 minutes. For example, in the soaking of the present invention, the heat treatment may be performed at a temperature ranging from 850 °C to 950 °C. Since the soaking is performed at the high temperature, it is possible to reduce and restore degradation of the magnetic properties due to increased mechanical and thermal stress in an incised portion due to the processing such as cutting.

In the conventional electrical steel sheet, the insulation coating layer may break during the heat treatment at a high temperature, and thus there is a concern about loss of an eddy current. When the loss of the eddy current is increased, efficiency of the motor is reduced. Thus, the soaking may only be performed at a temperature of 800 °C or less. Consequently, there is a problem in that a relaxation degree of a decrease in magnetic properties due to the decrease in mechanical stress is insufficient.

On the other hand, according to the present invention, even when the soaking is performed at the high temperature exceeding 800 °C using a non-oriented electrical steel sheet with the above-described composition, degradation of the insulation coating layer may not occur. It can be confirmed that adhesion between the insulation coating layer and the surface of the electrical steel sheet is maintained well. In addition, since the soaking is performed at the high temperature exceeding 850 °C, it is possible to reduce and restore degradation of the magnetic properties due to increased mechanical and thermal stress in an incised portion due to the processing such as cutting.

Since the soaking involves performing the heat treatment at the above high temperature, the time of the heat treatment can be significantly reduced. The soaking may be maintained for 1 to 30 minutes. Thus, a process time required for the heat treatment can be reduced, and thus it may be more economical.

When the temperature and the time during the soaking are less than the above ranges, stress relief and degradation recovery of the magnetic properties may be insufficient. During the recrystallization heat treatment, since it is difficult to change structures remaining as the non-recrystallized structures, it may be difficult to reduce iron loss. On the other hand, when the temperature and the time exceed the above ranges, it is not economical because it may act as a factor that only increases the manufacturing cost and the duration without further increasing the effect.

In addition, the soaking may involve performing the heat treatment in an atmosphere of 90% to 100% Ar.

In the final heat treatment, the cooling may involve performing the heat treatment by reducing the temperature to room temperature at a cooling rate of 100 °C per hour. Here, water cooling or natural air cooling may be employed for the cooling.

In the final heat treatment, the temperature and atmospheric conditions are controlled to reduce the mechanical stress so that the magnetic properties of the electrical steel sheet can be improved. Thus, low iron loss can be exhibited. In addition, in addition to the improved magnetic properties, the manufacturing method according to the present invention may suppress degradation of the insulating coating layer. Thus, it is possible to maintain adhesive strength with the electrical steel sheet.

In addition, for the three heat treatments, that is, the heating, the soaking, and the cooling, according to the present invention, each furnace may be configured in a continuous line or rotary type, or a device for performing several operations under different heat treatment conditions for each section within one furnace may be used.

The non-oriented electrical steel sheet according to the embodiment of the present invention, which was manufactured by the above manufacturing method, was processed into parts for a motor and then underwent the soaking at a high temperature of 850 °C or higher so that strength of the electrical steel sheet was increased and the magnetic properties thereof were improved.

In addition, since the time of the heat treatment time is shortened in the range of 1 to 30 minutes, process costs can be reduced and iron loss can be reduced.

According to another embodiment of the present invention, a non-oriented electrical steel sheet manufactured by the above manufacturing method is provided.

Specifically, the non-oriented electrical steel sheet according to another embodiment of the present invention includes 0.05 wt% or less C, 1.0 wt% to 3.5 wt% Si, 0.2 wt% to 0.6 wt% Al, 0.02 wt% to 0.20 wt% Mn, 0.01 wt% to 0.20 wt% P, 0.01 wt% or less S, and the balance of Fe and inevitable impurities.

In addition, the non-oriented electrical steel sheet according to the present invention may have a low iron loss value ranging from about 2% to about 5% in both W10/400 and W15/50 measurement conditions.

In addition, the non-oriented electrical steel sheet according to another embodiment of the present invention has a tensile strength ranging from 350 N/mm² to 540 N/mm² and hardness ranging from 200 Hv to 270 Hv. In addition, the non-oriented electrical steel sheet has a magnetic flux density (B50) ranging from 1.65 T to 1.80 T.

In addition, the non-oriented electrical steel sheet and the manufacturing method thereof according to the embodiment of the present invention secure excellent magnetic properties by improving a aggregate structure with excellent magnetic properties, and therefore the non-oriented electrical steel sheet is suitable for use as iron cores for linear compressor motors, air conditioner compressor motors, and high-speed motors for cleaners.

### Example

Hereinafter, a configuration and an operation of the present invention will be described in more detail through exemplary examples of the present invention. However, these examples are presented as exemplary examples of the present invention and cannot be construed as limiting the present invention in any sense.

Content not described herein can be technically inferred by those skilled in the art, and thus description thereof will be omitted.

### 1. Specimen manufacture

Specimens were manufactured with a composition of Manufacturing Example 1 shown in Table 1, and specimens according to Example 1 and Comparative Example 1 were manufactured under final thermal process conditions shown in Table 2. Comparative Example 2 did not undergo final heat treatment.

**[Table 1]**

| Items | C | Si | Al | Mn | P | Cu (ppm) | Ni (ppm) | Cr (ppm) | S (ppm) | Fe |
|---|---|---|---|---|---|---|---|---|---|---|
| Manufacturing Example 1 | 0.020 | 13.01 | 0.41 | 0.13 | 0.14 | 106 | 77 | 41 | 43 | Bal. |

| | | | | | | | | | | |
|---|---|---|---|---|---|---|---|---|---|---|
| (unit: wt%) | | | | | | | | | | |

**[Table 2]**

| Items | Heating heating speed/time | Soaking maintenance temperature/time | Cooling cooling speed (to room temperature (24 °C)) | Atmosphere | Final steel sheet thickness (mm) |
|---|---|---|---|---|---|
| Example 1 | 600 °C/h 1.55 hours | 950 °C 10 minutes | 100 °C/h | Ar | 0.20 |
| Comparative Example 1 | 600 °C/h 1.55 hours | 770 °C 2 hours | 100 °C/h | Ar | 0.20 |
| Comparative Example 2 | | - | - | - | 0.20 |

### 2. Physical property evaluation

Table 3 shows iron loss measurement results for the specimens according to Example 1 and Comparative Examples 1 and 2. In this case, the iron loss W15/50 is an amount of energy loss consumed as heat or the like when a magnetic flux density of 1.5 teslas is induced in the iron core at a 50 Hz alternating current.

**[Table 3]**

| Items | Iron loss (W/Kg) | |
|---|---|---|
| | W10/400 | W15/50 |
| Example 1 | 14.69 | 1.93 |
| Comparative Example 1 | 15.12 | 2.02 |
| Comparative Example 2 | 18.74 | 2.26 |

As shown in Table 3, the specimen according to the example exhibited an iron loss reduction effect ranging from about 2% to about 5% in both the W10/400 and W15/50 measurement conditions. In addition, in the case of the specimen according to the example, degradation of the insulating coating layer was not observed, and it was confirmed that adhesiveness between the insulating coating layer and the surface of the electrical steel sheet was maintained well.

Although the present invention has been described, it is obvious that the present invention is not limited by the content disclosed herein, and that various modifications can be made by those skilled in the art within the technical scope of the present invention. In addition, although the operational effects according to the configuration of the present invention have not been explicitly described in description of the present invention, it is natural that the effects predictable from the corresponding configuration should also be recognized.

## Claims

1. A method of manufacturing a non-oriented electrical steel sheet, the method comprising operations of:
(a) reheating a steel slab, which includes 0.05 wt% or less C, 1.0 wt% to 3.5 wt% Si, 0.2 wt% to 0.6 wt% Al, 0.02 wt% to 0.20 wt% Mn, 0.01 wt% to 0.20 wt% P, 0.01 wt% or less S, and the balance of Fe and inevitable impurities, and then hot rolling the steel slab;
(b) performing a hot rolling annealing heat-treatment on the hot-rolled steel sheet and pickling the steel sheet;
(c) performing cold rolling on the pickled steel sheet;
(d) performing insulation coating on the cold rolled steel sheet, and then processing the insulation-coated steel sheet; and
(e) performing final heat treatment by heating, soaking, and cooling the processed steel sheet,
wherein the soaking process is maintained and performed at a temperature of 850 °C or higher for 1 to 30 minutes.

2. The method of claim 1, wherein the soaking process is performed at a temperature ranging from 850 °C to 950 °C.

3. The method of claim 1, wherein the soaking process is performed in an Ar atmosphere.

4. The method of claim 1, wherein the heating process is performed by heating at 300 °C to 600 °C per hour for 1.4 to 3.2 hours.

5. The method of claim 1, wherein the cooling process is performed to room temperature at a cooling rate of 100 °C per hour.

6. The method of claim 1, wherein, in the operation (a), the steel slab further includes one or more among 0.03 wt% or less Cu, 0.03 wt% or less Ni, and 0.05 wt% or less Cr.

7. The method of claim 1, wherein, after the operation (c), the electrical steel sheet has a thickness ranging from 0.05 mm to 0.50 mm.

8. A non-oriented electrical steel sheet manufactured by the manufacturing method according to any one of claims 1 to 7.
